# EUROPEAN PATENT APPLICATION

(11) **EP 4 797 220 A1**
(43) Date of publication of application: **26.08.2026**
(21) Application number: 24878462.1
(22) Date of filing: 20.05.2024
(51) Int. Cl.: G06V 10/776

(54) **VEHICLE DOOR STATE RECOGNITION METHOD AND SYSTEM BASED ON TIME SERIES DATA TO IMAGE CONVERSION**

(30) Priority: 18.10.2023 CN 202311350976
(71) Applicant: Nanjing Kangni Mechanical & Electrical Co., Ltd., Nanjing, Jiangsu 210038 (CN)
(72) Inventor: WANG, Zujin, Nanjing, Jiangsu 210038 (CN); SUN, Changli, Nanjing, Jiangsu 210038 (CN); CHEN, Jianfei, Nanjing, Jiangsu 210038 (CN); ZHANG, Wei, Nanjing, Jiangsu 210038 (CN)
(74) Representative: Murgitroyd & Company
(86) International application number: PCT/CN2024/094101
(87) International publication number: WO 2025/081809

(57) **Abstract**

Disclosed in the present invention are a vehicle door state recognition method and system based on time series data to image conversion. The method comprises: collecting time series data in a vehicle door moving process and performing data preprocessing, and defining a set of calibration data and a set of data to be diagnosed; separately performing distribution density grayscale image processing on the preprocessed set of calibration data and the preprocessed set of data to be diagnosed, and generating a difference density image; performing change area recognition and change degree evaluation on the basis of the difference density image to obtain a vehicle door state offset degree; and establishing a vehicle door functional component zoning map, performing functional component association on the basis of the vehicle door state offset degree, and recognizing an abnormal functional component. According to the present invention, the degree of a vehicle door abnormality can be quantitatively evaluated, and an abnormal area is associated with a moving component, so that the present invention achieves high universality and good interpretability, and facilitates on-site precision maintenance.

## Description

### TECHNICAL FIELD

The present invention relates to anomaly diagnosis technology for railcar vehicle door systems, and in particular to a vehicle door state recognition method and system based on time series data to image conversion.

### BACKGROUND

Door systems of rail vehicles are structurally complex, and operate frequently in diverse operating environments. As a result, the number of failures of the door systems accounts for more than 30% of the total failures of all vehicle components. Currently, the maintenance and repair of doors mainly reply on scheduled and system-wide overhauls, leading to heavy maintenance workloads and high costs. Therefore, there is an urgent need to employ intelligent methods to monitor the condition of the door systems, transforming scheduled maintenance into predictive condition-based maintenance, thereby improving the operational reliability of the doors and reducing maintenance costs.

At present, the state recognition of railcar doors is primarily based on motor time series data, which involves extracting data features to construct machine learning diagnostic models to identify trends in data variation. However, trend analysis cannot quantitatively evaluate the degree of abnormality in door operation, which is not conducive to determining an interval for pushing early warning notification. In addition, practical applications have revealed that, influenced by factors such as door position, wind pressure, and electronic control, the data variation trends are inconsistent among different doors under the identical offset states. When diagnostic algorithms are migrated for application, it is often necessary to perform new experiments and modeling, which is time-consuming and costly, resulting in poor generalizability and high false alarm and missed detection rates. In addition, the diagnostic models for abnormal door conditions are decoupled from the door operating mechanisms, and the diagnostic results are not directly associated with critical components, thereby failing to provide effective guidance for on-site maintenance.

### SUMMARY

Objectives: The present invention aims to provide a vehicle door state recognition method and system based on time series data to image conversion capable of quantitatively evaluating a degree of vehicle door abnormality and associating abnormal areas with a moving component.

Technical solution: the vehicle door state recognition method based on time series data to image conversion provided by the present invention includes the following steps:
(1) collecting time series data in a vehicle door moving process and performing data preprocessing, and defining a set of calibration data and a set of data to be diagnosed;
(2) separately performing distribution density grayscale image processing on the preprocessed set of calibration data and the preprocessed set of data to be diagnosed, and generating a difference density image;
(3) performing change area recognition and change degree evaluation on the basis of the difference density image to obtain a vehicle door state offset degree; and
(4) establishing a vehicle door functional component zoning map, performing functional component association on the basis of the vehicle door state offset degree, and recognizing an abnormal functional component.

Preferably, the time series data in a vehicle door moving process in the step (1) includes parameter data such as motor current, motor speed, and motor rotation angle during door opening and closing processes.

Preferably, the data preprocessing in the step (1) includes eliminating abnormal data and/or performing displacement domain conversion on the time series data.

Preferably, for a single set of data of motor current, motor rotational speed, and motor rotation angle, the displacement domain conversion includes plotting a displacement domain curve image of the single set of data using the motor rotation angle or a displacement converted from the motor rotation angle as a horizontal coordinate, and the motor rotational speed or motor current as a vertical coordinate, reading a row index of a lowest pixel in each column of the image as a rotational speed or current corresponding to the rotation angle or displacement value, thereby obtaining displacement domain data.

Preferably, the set of calibration data includes a single-door or multi-door time series data set or a displacement domain data set; and the set of data to be diagnosed includes a single-door time series data set or a displacement domain data set, where the multi-door refers to a collection of doors operating under similar working conditions within a same time period.

Preferably, the distribution density grayscale image processing in the step (2) includes:
for the single-door time series data set or displacement domain data set, selecting quantitative data from the data set as an image processing dataset; creating a zero-filled array by taking a maximum value of a specific parameter in the dataset as a number of rows of the array, and a maximum length of the parameter data as a number of columns of the array; for each value in each data entry of the parameter dataset, incrementing an value at a corresponding position of the array by 1 to form a data density array related to the data distribution quantity; and scaling values of the data density array to a range of 0-255 to generate a displacement domain distribution density grayscale image of the parameter data; and
for the multi-door time series data set or displacement domain data set, selecting quantitative data from the data set as an image processing dataset; creating a zero-filled array by taking a maximum value of a specific parameter in the dataset as a number of rows of the array, and a maximum length of the parameter data as a number of columns of the array; for each value in each data entry of the parameter dataset, incrementing an value at a corresponding position of the array by 1 to form a data density array related to the data distribution quantity; calculating sparse pixel values of the array according to a specified proportion, and setting the sparse pixel values of the array to zero, thereby obtaining a common-region density array of the time series data; and scaling values of the data density array to a range of 0-255 to generate a displacement domain distribution density grayscale image of the parameter data.

Preferably, before generating a difference density image in the step (2), the method further includes performing image data alignment.

Preferably, the image data alignment includes selecting maximum length and width values of the distribution density grayscale images of the calibration data and the data to be diagnosed as maximum dimensions, and padding zeros at corresponding positions in other image arrays according to the maximum dimensions.

Preferably, the generating a difference density image in the step (2) includes removing areas identical to those in the aligned calibration data distribution density grayscale image based on the aligned distribution density grayscale image of the set of data to be diagnosed to generate the difference density image.

Preferably, the change area recognition in the step (3) includes recognizing areas with relatively concentrated data points in the difference density image based on intelligent algorithms, where the intelligent algorithms include a pixel-and-sliding-window recognition method and an effective pixel column recognition method.

Preferably, the pixel-and-sliding-window recognition method includes:
1) calculating and ranking a sum of pixel values within an area of the difference density image using a sliding window;
2) obtaining a large change area and a refined change area based on change window recognition rules; and
3) dividing data changes into full-process changes or local changes according to the large change area and the change window recognition rules.

Specifically, the above change window recognition rules are as follows:
(i) when a sum of pixel values of a window ranking first is greater than twice a sum of pixel values of a window ranking second, the image is considered to exhibit a single local area change, and the change area is a time series or displacement region corresponding to the window ranking first;
(ii) when a sum of pixel values of more than half of the windows is greater than 0.5 times pixel values of the window ranking first, the image is considered to exhibit a full-process area change, and the full process constitutes the change area; and
(iii) when the sum of pixel values of the window ranking first is less than twice the sum of pixel values of the window ranking second, and a sum of pixel values of less than half of the windows is greater than 0.5 times the sum of pixel values of the window ranking first, the image is considered to have a plurality of local area changes, and the change area is the time series or displacement region corresponding to the windows where the sum of pixel values is greater than 0.5 times the sum of pixel values of the window ranking first.

Preferably, the effective pixel column recognition method includes:
1) pre-setting an effective pixel grayscale threshold and a minimum continuous length threshold of effective pixel columns;
2) obtaining all columns in which effective pixels of the image are located based on the difference density image;
3) determining the continuity of the effective pixel columns to obtain continuous areas of effective pixel columns; and
4) determining a length of the continuous areas of effective pixel columns; when a maximum length of the continuous area is less than a minimum continuous length threshold of effective pixel columns, no area is output; otherwise, all sub-areas are output as change areas.

Preferably, performing change degree evaluation using a feature analysis evaluation method in the step (3) and obtaining a vehicle door state offset degree through feature analysis; where the feature analysis evaluation method includes a regional centroid offset evaluation method, a co-occurrence matrix evaluation method, a mean square error evaluation method, and an effective pixel point evaluation method.

Preferably, the regional centroid offset evaluation method mainly includes:
1) calculating centroid coordinates of the change area in the time series or displacement domain distribution density images of the calibration data and the data to be diagnosed, respectively. For a discrete two-dimensional image, assuming its pixel value to be *I*(*i,j*), where *i* denotes a horizontal coordinate of a pixel point and *j* denotes a vertical coordinate of the pixel point. Formulas for calculating a centroid (*Gₓ, G_{y}*) of the image areas follows: ${G}_{x} = \left(\sum \left(i*I\left(i, j\right)\right)\right) / M$ ${G}_{y} = \left(\sum \left(j*I\left(i, j\right)\right)\right) / M$ where *M* is a sum of all pixel values of the image: *M* = ΣΣ(*I*(*i,j*))
2) calculating absolute centroid offsets Δ*Gₓ* and Δ*G_{y}*, as well as relative centroid offsets *Rate*(*Gₓ*) and *Rate*(*G_{y}*) *,* of the data to be diagnosed relative to the calibration data according to a centroid (*G_{xstd}*, *G_{ystd}* ) of the calibration data and a centroid (*G_{xdiag} , G_{ydiag}* ) of the data to be diagnosed, with calculation formulas as follows: $Δ {G}_{x} = {G}_{{x}_{diag}} - {G}_{{x}_{std}}$ $Δ {G}_{y} = {G}_{{y}_{diag}} - {G}_{{y}_{std}}$ $Rate \left({G}_{x}\right) = Δ {G}_{x} / {G}_{{x}_{std}}$ $Rate \left({G}_{y}\right) = Δ {G}_{y} / {G}_{{y}_{std}}$
3) comparing with a predetermined centroid alarm threshold; and determining that the door state in the change area is offset when the threshold is exceeded.

Preferably, the co-occurrence matrix evaluation method includes:
1) calculating a correlation feature of a co-occurrence matrix of the calibration data: two sets of quantitative data are randomly selected from the set of calibration data as the data to be diagnosed and the calibration data, a large change area is recognized using the pixel-and-sliding-window recognition method to obtain the large change area of each difference density image, and a correlation feature *p_{std}* of the co-occurrence matrix of the calibration data is calculated;
2) calculating correlation features of the co-occurrence matrix of the data to be diagnosed: a correlation feature *p_{diag}* of the co-occurrence matrix of the data to be diagnosed for the image region is calculated according to the large change area of the difference density image; and
3) comparing *p_{std}* and *p_{diag}* for determination; when *p_{diag}* > *p_{std}*, determining that the door state in the change area is offset.

Preferably, the establishing a vehicle door functional component zoning map in the step (4) includes zoning a vehicle door movement process according to the data of motor rotation angle. A zoning interval is greater than a minimum angle that is recognized by a motor position sensor, such that types of functional components within the same zoning are minimized.

Preferably, the functional component association in the step (4) includes converting the vehicle door state offset data into the data of motor rotation angle, searching for the corresponding functional component zoning and functional components in the zoning using the door functional component zoning map based on the data of rotation angle.

Preferably, the method further includes iteratively updating the model, where the iteratively updating the model includes inputting main line operational data and data labels as a model to automatically update parameters of the model based on feedback from main line operation and maintenance.

The present invention provides a vehicle door state recognition system based on time series data to image conversion, including:
a data acquisition and preprocessing module, configured to collect time series data in a vehicle door moving process and perform data preprocessing;
a difference density image generation module, configured to separately perform distribution density grayscale image processing on the preprocessed set of calibration data and the preprocessed set of data to be diagnosed, and generate a difference density image;
a change area and degree recognition module configured to perform change area recognition and change degree evaluation on the basis of the difference density image to obtain a vehicle door state offset degree; and
an abnormal functional component association module, configured to establish a vehicle door functional component zoning map, perform functional component association on the basis of the vehicle door state offset degree, and recognize an abnormal functional component.

Preferably, the vehicle door state recognition system based on time series data to image conversion is applied to implement the above vehicle door state recognition method based on time series data to image conversion.

The present invention further provides an electronic device, including a memory, a processor and a computer program stored on the memory and runnable on the processor, where when the computer program is loaded into the processor, the above vehicle door state recognition method based on time series data to image conversion is implemented.

The present invention further provides a computer-readable storage medium having a computer program stored thereon, where when the computer program is executed by a processor, the above vehicle door state recognition method based on time series data to image conversion is implemented.

Beneficial Effects: Compared with the prior art, the present invention has the following significant advantages: in the present invention, image processing is performed on motor data to generate grayscale images related to data distribution density, data change areas are recognized through multiple intelligent algorithms, and the degree of vehicle door abnormality is quantitatively evaluated; vehicle doors with state offset and offset areas are recognized, a vehicle door functional component zoning map is established, the vehicle door state offset are as are associated with functional components of the door system according to the vehicle door functional component zoning map, and are combined with associated components as early warning information for pushing, thereby facilitating on-site maintenance. In addition, the method avoids the time-consuming and costly experimental modeling required in conventional door state diagnosis, thereby reducing deployment time and exhibiting general applicability. Furthermore, the method is capable of automatically iterating and optimizing based on actual main line operation conditions, continuously improving algorithm model performance and enhancing the operational reliability of the door system.

### BRIEF DESCRIPTION OF THE DRAWINGS

FIG. 1 is a schematic flowchart of a method according to the present invention.
FIG. 2 is a schematic diagram of data curves for a vehicle door before preprocessing according to an embodiment of the present invention, wherein: (a) is a motor rotation angle curve during door opening; (b) is a motor rotation angle curve during door closing; (c) is a motor rotational speed curve during door opening, (d) is a motor rotational speed curve during door closing; and (e) is a motor current curve during door opening; and (f) is a motor current curve during door closing.
FIG. 3 is a schematic diagram of data curves for a vehicle door after preprocessing according to an embodiment of the present invention, wherein: (a) is a motor rotation angle curve during door opening; (b) is a motor rotation angle curve during door closing; (c) is a motor rotational speed curve during door opening, (d) is a motor rotational speed curve during door closing; and (e) is a motor current curve during door opening; and (f) is a motor current curve during door closing.
FIG. 4 is a displacement domain distribution density grayscale image of an opening speed of calibration data according to an embodiment of the present invention.
FIG. 5 is a displacement domain distribution density grayscale image of an opening current of calibration data according to an embodiment of the present invention.
FIG. 6 is a displacement domain distribution density grayscale image of a closing speed of calibration data according to an embodiment of the present invention.
FIG. 7 is a displacement domain distribution density grayscale image of a closing current of calibration data according to an embodiment of the present invention.
FIG. 8 is a displacement domain distribution density grayscale image of an opening speed of data to be diagnosed according to an embodiment of the present invention.
FIG. 9 is a displacement domain distribution density grayscale image of an opening current of data to be diagnosed according to an embodiment of the present invention.
FIG. 10 is a displacement domain distribution density grayscale image of a closing speed of data to be diagnosed according to an embodiment of the present invention.
FIG. 11 is a displacement domain distribution density grayscale image of a closing current of data to be diagnosed according to an embodiment of the present invention.
FIG. 12 is a difference density image of an opening speed of data to be diagnosed according to an embodiment of the present invention.
FIG. 13 is a difference density image of an opening current of data to be diagnosed according to an embodiment of the present invention.
FIG. 14 is a difference density image of a closing speed of data to be diagnosed according to an embodiment of the present invention.
FIG. 15 is a difference density image of a closing current of data to be diagnosed according to an embodiment of the present invention.
FIG. 16 is a vehicle door functional component zoning map according to an embodiment of the present invention.

### DETAILED DESCRIPTION OF EMBODIMENTS

The technical solution of the present invention will be further described below with reference to the accompanying drawings.

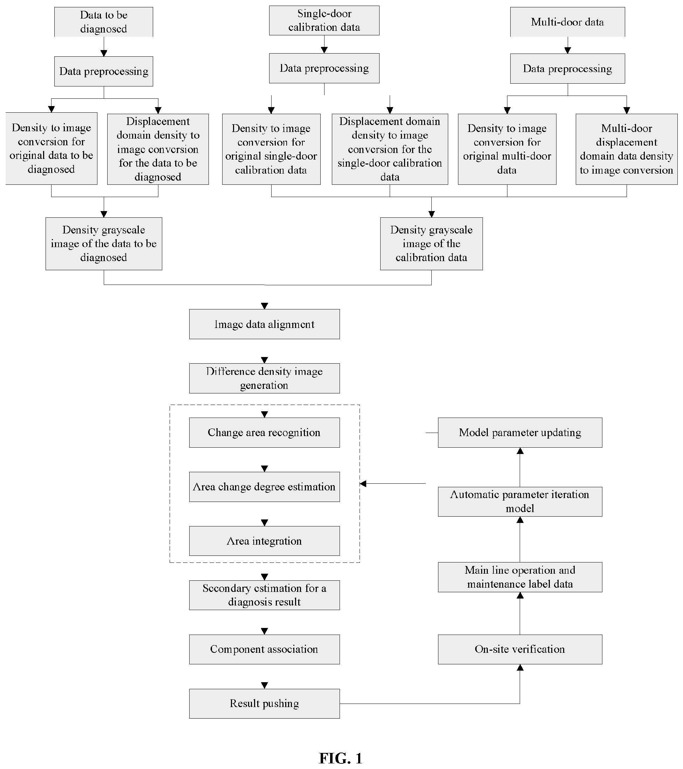

As shown in FIG. 1, the present invention provides a vehicle door state recognition method based on time series data to image conversion, including the following steps:
(1) collecting time series data in a vehicle door moving process and performing data preprocessing. This step specifically includes:
   (1.1) collecting time series data in a vehicle door moving process, including parameter data such as motor current, motor speed, and motor rotation angle during door opening and closing processes.
   (1.2) Removing motor data after stall and eliminating obviously abnormal data.
   (1.3) Performing displacement domain data conversion.

For a single set of motor current, rotational speed, and rotation angle data, a displacement domain curve image of the single set of data is plotted using the motor rotation angle or a displacement converted from the motor rotation angle as a horizontal coordinate, and the motor rotational speed or motor current as a vertical coordinate. A row index of a lowest pixel in each column of the image is read as a rotational speed or current corresponding to the displacement value, thereby obtaining displacement domain data.

Specifically, the following motor rotation angle is converted into displacement by using the following rotation angle-displacement conversion formula: $dis = angle * d / 360$ where *dis* denotes a vehicle door displacement in *mm*; *angle* denotes a motor rotation angle, in *degrees* (*°*); and *d* denotes a lead of a lead screw. In this embodiment, a lead of a sliding-plug door is 64.

### (1.4) Dividing a set of calibration data and a set of data to be diagnosed.

The set of calibration data includes a single-door or multi-door time series data set or a displacement domain data set; and the set of data to be diagnosed includes a single-door time series data set or a displacement domain data set,. The multi-door refers to a collection of doors operating under similar working conditions within a same time period. Compared with the single-door data set, the multi-door time series data set or displacement domain data set can mitigate the impact of potential anomalies in the single-door data.

(2) Separately performing distribution density grayscale image processing on the preprocessed set of calibration data and the preprocessed set of data to be diagnosed, and generating a difference density image. This step specifically includes:
(2.1) Processing distribution density grayscale image of the set of calibration data, mainly including four methods: single-door time series data distribution density processing, single-door displacement domain data distribution density processing, multi-door time series data distribution density processing, and multi-door displacement domain data distribution density processing.
   (a) For the single-door time series data set of the calibration data, quantitative data is selected from the single-door time series data set as a data set for subsequent image processing. A zero-filled array is created by taking a maximum value of a specific parameter in the data set (such as opening speed, opening current, closing speed, or closing current) as a number of rows of the array, and a maximum length of the parameter data as a number of columns of the array. For each value in each data entry of the parameter dataset, the corresponding position in the array is incremented by 1 to form a data density array related to the data distribution quantity. Values of the data density array are scaled to a range of 0-255 to generate a time series distribution density grayscale image of the parameter data, thereby obtaining time series distribution density grayscale images of opening speed, opening current, closing speed, and closing current for the single-door calibration data.
   (b) For the single-door displacement domain data set of the calibration data, quantitative data is selected from the single-door displacement domain data set as a data set for subsequent image processing. A zero-filled array is created by taking a maximum value of a specific parameter in the data set (such as opening speed, opening current, closing speed, or closing current) as a number of rows of the array, and a maximum length of the parameter data as a number of columns of the array. For each value in each data entry of the parameter dataset, the corresponding position in the array is incremented by 1 to form a data density array related to the data distribution quantity. Values of the data density array are scaled to a range of 0-255 to generate a displacement domain distribution density grayscale image of the parameter data, thereby obtaining displacement domain distribution density grayscale images of opening speed, opening current, closing speed, and closing current for the single-door calibration data.
   (c) For the multi-door time series data set of the calibration data, quantitative data is selected from the multi-door time series data sets of each door as a data set for subsequent image processing. A zero-filled array is created by taking a maximum value of a specific parameter in the data set (such as opening speed, opening current, closing speed, or closing current) as a number of rows of the array, and a maximum length of the parameter data as a number of columns of the array. For each value in each data entry of the parameter dataset, the corresponding position in the array is incremented by 1 to form a data density array related to the data distribution quantity. Sparse pixel values of the array are calculated according to a specified proportion, and the sparse pixel values in the array are set to zero, thereby obtaining a common-region density array of the time series data. Values of the density array are scaled to a range of 0-255 to generate a multi-door time series distribution density grayscale image of the parameter data, thereby obtaining multi-door time series distribution density grayscale images of opening speed, opening current, closing speed, and closing current for the multi-door calibration data.
   (d) For the multi-door displacement domain data set of the calibration data, quantitative data is selected from the multi-door displacement domain data sets of each door as a data set for subsequent image processing. A zero-filled array is created by taking a maximum value of a specific parameter in the data set (such as opening speed, opening current, closing speed, or closing current) as a number of rows of the array, and a maximum length of the parameter data as a number of columns of the array. For each value in each data entry of the parameter dataset, the corresponding position in the array is incremented by 1 to form a data density array related to the data distribution quantity. Sparse pixel values of the array are calculated according to a specified proportion, and the sparse pixel values in the array are set to zero, thereby obtaining a common-region density array of the displacement domain data. Values of the density array are scaled to a range of 0-255 to generate a multi-door displacement domain distribution density grayscale image of the parameter data, thereby obtaining multi-door displacement domain distribution density grayscale images of opening speed, opening current, closing speed, and closing current for the multi-door calibration data.
(2.2) Processing distribution density grayscale image of the set of data to be diagnosed, mainly including two methods: single-door time series data distribution density image processing and single-door displacement domain data distribution density image processing. The specific steps are the same as those in (a) and (b) of step (2.1).
(2.3) Performing image data alignment.

Length and width of the calibration data distribution density grayscale images obtained in step (2.1) are compared with those of the distribution density grayscale images of the set of data to be diagnosed obtained in step (2.2). Maximum length and width values are taken as maximum dimensions, and zeros are padded at corresponding positions in other image arrays according to the maximum dimensions.

### (2.4) Generating a difference density image.

Based on the aligned distribution density grayscale image of the set of data to be diagnosed, regions identical to those in the aligned calibration data distribution density grayscale image are removed. The removal methods include, but are not limited to, pixel subtraction and setting the pixel values of overlapping regions to zero, thereby generating a difference density image.

Specifically, generating a difference density image by setting the pixel values of overlapping regions to zero includes: for each pixel (i, j) in the distribution density grayscale image of the set of data to be diagnosed, when a pixel value at the same position in the calibration data distribution density grayscale image is not 0, a value of the pixel (i, j) in the distribution density grayscale image of the set of data to be diagnosed is directly set to 0, thereby obtaining difference density images of opening speed, opening current, closing speed, and closing current, respectively.

(3) Performing change area recognition and change degree evaluation on the basis of the difference density image to obtain a vehicle door state offset degree. This step specifically includes:
(3.1) performing change area recognition.

Based on intelligent algorithms, areas with relatively concentrated data points in the difference density image are recognized, which are the concentrated change area of the set of data to be diagnosed relative to the calibration data. The intelligent algorithms used include a pixel-and-sliding-window recognition method and an effective pixel column recognition method.

Specifically, the pixel-and-window recognition method mainly includes the following steps:
1) performing initial area recognition: a first sliding window is employed to calculate and rank a sum of pixel values within an area of the difference density image; and large change areas corresponding to the first sliding window are obtained based on change window recognition rules;
2) calculating and ranking a sum of value pixels in small windows within the recognized large change areas using a second sliding window; and obtaining a refined change area corresponding to the second sliding window based on the change window recognition rules;
   where a window of the second sliding window is smaller than that of the first sliding window; and
3) dividing data changes into full-process changes or local changes according to the large change area and the change window recognition rules.

Specifically, the above change window recognition rules are as follows:
(i) when a sum of pixel values of a window ranking first is greater than twice a sum of pixel values of a window ranking second, the image is considered to exhibit a single local area change, and the change area is a time series or displacement region corresponding to the window ranking first;
(ii) when a sum of pixel values of more than half of the windows is greater than 0.5 times pixel values of the window ranking first, the image is considered to exhibit a full-process area change, and the full process constitutes the change area; and
(iii) when the sum of pixel values of the window ranking first is less than twice the sum of pixel values of the window ranking second, and a sum of pixel values of less than half of the windows is greater than 0.5 times the sum of pixel values of the window ranking first, the image is considered to have a plurality of local area changes, and the change area is the time series or displacement region corresponding to the windows where the sum of pixel values is greater than 0.5 times the sum of pixel values of the window ranking first.

The effective pixel column recognition method mainly includes the following steps:
1) Pre-setting an effective pixel grayscale threshold and a minimum continuous length threshold of effectivecolumns;
2) obtaining all columns in which effective pixels of the image are located based on the difference density image;
3) determining the continuity of the effective pixel columns to obtain continuous areas of effective pixel columns; and
4) determining a length of the continuous areas of effective pixel columns; when a maximum length of the continuous area is less than a minimum continuous length threshold of effective pixel columns, no area is output; otherwise, all sub-areas are output as change areas.

### (3.2) Evaluating a change degree evaluation.

The degree of the area changes recognized in the step (3.2) is evaluated by a feature analysis evaluation method, to obtain data areas whose change degree complies with evaluation rules, that is, a vehicle door state offset degree is obtained. The feature analysis evaluation method includes a regional centroid offset evaluation method, a co-occurrence matrix evaluation method, a mean square error evaluation method, and an effective pixel point evaluation method.

Specifically, the regional centroid offset evaluation method mainly includes the following steps:
1) calculating centroid coordinates of the change area in the time series or displacement domain distribution density images of the calibration data and the data to be diagnosed, respectively. For a discrete two-dimensional image, assuming its pixel value to be I(i, j), where i denotes a horizontal coordinate of a pixel point and j denotes a vertical coordinate of the pixel point. Formulas for calculating a centroid (Gₓ, G_{y}) of the image are as follows: ${G}_{x} = \left(\sum \left(i*I\left(i, j\right)\right)\right) / M$ ${G}_{y} = \left(\sum \left(j*I\left(i, j\right)\right)\right) / M$ where M is a sum of all pixel values of the image: *M* = ΣΣ(*I*(*i*,*j*))
2) Calculating absolute centroid offsets Δ*Gₓ* and Δ*G_{y}* , as well as relative centroid offsets *Rate*(*Gₓ*) and *Rate*(*G_{y}*) *,* of the data to be diagnosed relative to the calibration data according to a centroid (*G_{xstd}*, *G_{ystd}*) of the calibration data and a centroid (*G_{xdiag}*, *G_{ydiag}*) of the data to be diagnosed, with calculation formulas as follows: $Δ {G}_{x} = {G}_{{x}_{diag}} - {G}_{{x}_{std}}$ $Δ {G}_{y} = {G}_{{y}_{diag}} - {G}_{{y}_{std}}$ $Rate \left({G}_{x}\right) = Δ {G}_{x} / {G}_{{x}_{std}}$ $Rate \left({G}_{y}\right) = Δ {G}_{y} / {G}_{{y}_{std}}$
3) Comparing with a predetermined centroid alarm threshold; and when the threshold is exceeded, a degree of centroid offset is considered to satisfy the conditions for degree evaluation.

Specifically, the co-occurrence matrix evaluation method mainly includes the following steps:
1) calculating a correlation feature of a co-occurrence matrix of the calibration data: two sets of quantitative data are randomly selected from the set of calibration data as the data to be diagnosed and the calibration data, a change area is recognized using the pixel-and-sliding-window recognition method to obtain the large change area of each difference density image, and a correlation feature *p_{std}* of the co-occurrence matrix of the calibration data is calculated;
2) calculating correlation features of the co-occurrence matrix of the data to be diagnosed: a correlation feature *p_{diag}* of the co-occurrence matrix of the data to be diagnosed for the image region is calculated according to the large change area of the difference density image; and
3) comparing *p_{std}* and *p_{diag}* for determination; when *p_{diag}* > *p_{std}* , a change degree evaluation is considered to satisfy the co-occurrence matrix correlation evaluation conditions. The co-occurrence matrix evaluation method may be used independently; however, due to its great computational load, the co-occurrence matrix correlation may be used for secondary evaluation of the change degree after the centroid offset satisfies the evaluation requirements.

### (3.3) Performing region integration.

The data areas exhibiting a change degree that satisfy the evaluation rules are integrated. The main methods include merging of adjacent regions and elimination of excessively small regions.

(4) Establishing a vehicle door functional component zoning map, performing functional component association on the basis of the vehicle door state offset degree, and recognizing an abnormal functional component.

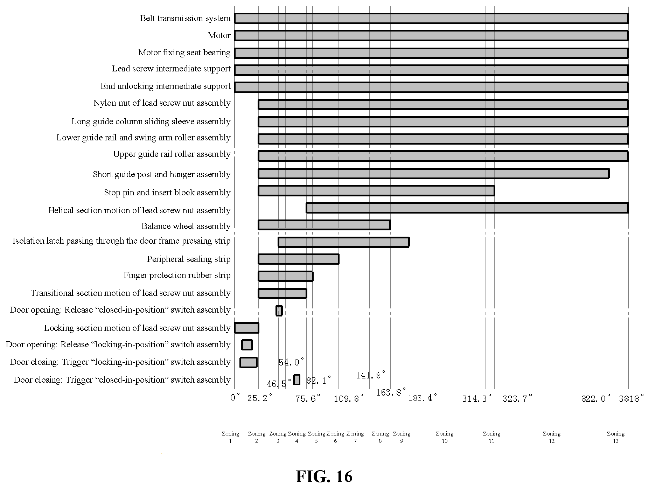

The establishing a vehicle door functional component zoning map includes zoning a vehicle door movement process according to the data of motor rotation angle. A zoning interval is greater than a minimum angle that is recognized by a motor position sensor, such that types of functional components within the same zoning are minimized, as shown in FIG. 16.

When the time series data are used, the regions with image changes obtained by diagnosis are time-offset data. It is necessary to convert the time region into a displacement region based on the original rotation angle data. For a time region t₁-t₂, the corresponding displacement region d₁-d₂ is: ${d}_{1} = angle \left({t}_{1}\right)$ ${d}_{2} = angle \left({t}_{2}\right)$

When the time series data are used, the regions with image changes obtained by diagnosis are rotation angle or displacement-offset data.

The displacement offset is converted into the motor rotation angle. According to the vehicle door functional component zoning map, the functional zoning corresponding to the regions of data variation is obtained, and the associated functional components corresponding to that zoning are then determined.

Specifically, the formula for converting rotation angle into displacement is as follows: $angle = dis * 360 / d$ where *angle* denotes a motor rotation angle, in degrees (°); *dis* denotes a vehicle door displacement in *mm*, and *d* denotes a lead of a lead screw.

(5) Performing model iteration. Based on feedback from main line operation and maintenance, operational labeled data are obtained. Main line operational data and data labels are input into a parameter iteration model to automatically update parameters of the model.

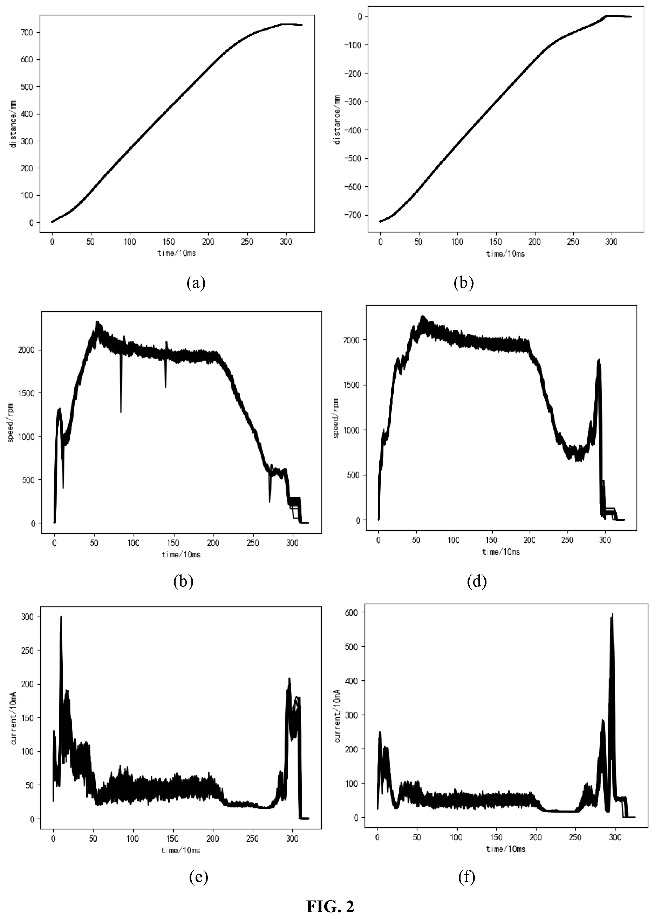

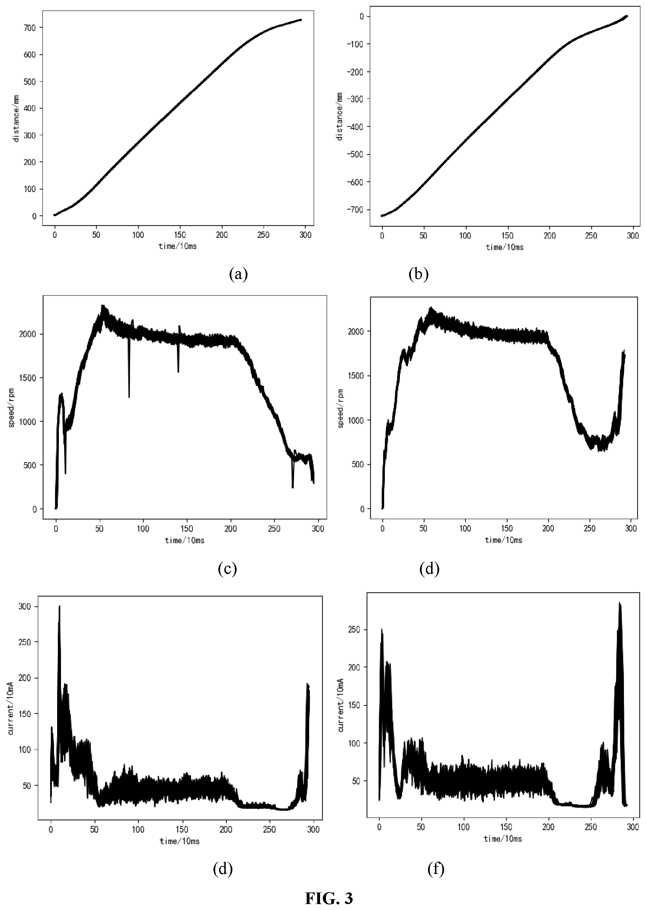

To further illustrate the method of the present invention, a door on a main line is taken as an example for door state evaluation. The specific steps are as follows:
(1) From the door calibration data and the motor time series data to be diagnosed, 30 sets of door opening and closing data are respectively selected, and a set of calibration data and a set of data to be diagnosed are subjected to preprocessing. This step specifically includes:
   (1.1) collecting time series data in a vehicle door moving process, including parameter data such as motor current, motor speed, and motor rotation angle during door opening and closing processes.
   (1.2) Removing motor data after stall and eliminating obviously abnormal data. Data curves of the door motor time series data before and after preprocessing are shown in FIGS. 2-3.
   (1.3) Performing displacement domain data conversion.

For a single set of motor current, rotational speed, and rotation angle data, a displacement domain curve image of the single set of data is plotted using the motor rotation angle or a displacement converted from the motor rotation angle as a horizontal coordinate, and the motor rotational speed or motor current as a vertical coordinate in this embodiment. A row index of a lowest pixel in each column of the image is read as a rotational speed or current corresponding to the displacement value, thereby obtaining displacement domain data. The closing displacement data are subjected to an absolute value operation followed by negative value, while other data are subjected to an absolute value operation.

Specifically, the following motor rotation angle is converted into displacement by using the following rotation angle-displacement conversion formula: $dis = angle * d / 360$ where *dis* denotes a vehicle door displacement in *mm*; *angle* denotes a motor rotation angle, in *degrees* (*°*); and *d* denotes a lead of a lead screw. In this embodiment, a lead of the sliding-plug door is 64.

### (1.4) Dividing a set of calibration data and a set of data to be diagnosed.

The preprocessed single-door displacement domain data after conversion are used as the set of calibration data and the set of data to be diagnosed.

(2) Separately performing distribution density grayscale image processing on the preprocessed set of calibration data and the preprocessed set of data to be diagnosed, and generating a difference density image.

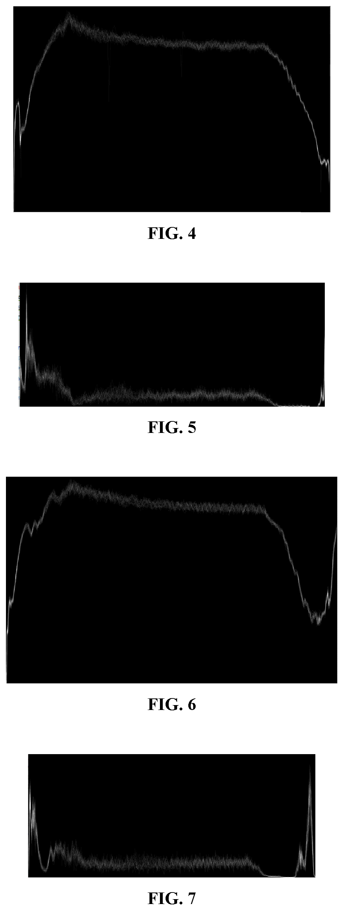

(2.1) Processing distribution density grayscale image of the set of calibration data, Quantitative data is selected from the single-door displacement domain data set as a data set for subsequent image processing. A zero-filled array is created by taking a maximum value of a specific parameter in the data set (such as opening speed, opening current, closing speed, or closing current) as a number of rows of the array, and a maximum length of the parameter data as a number of columns of the array. For each value in each data entry of the parameter dataset, the corresponding position in the array is incremented by 1 to form a data density array related to the data distribution quantity. Values of the data density array are scaled to a range of 0-255 to generate a displacement domain distribution density grayscale image of the parameter data, thereby obtaining displacement domain distribution density grayscale images of opening speed, opening current, closing speed, and closing current for the single-door calibration data, as shown in FIGS. 4-7.

### (2.2) Processing distribution density grayscale image of the set of data to be diagnosed,

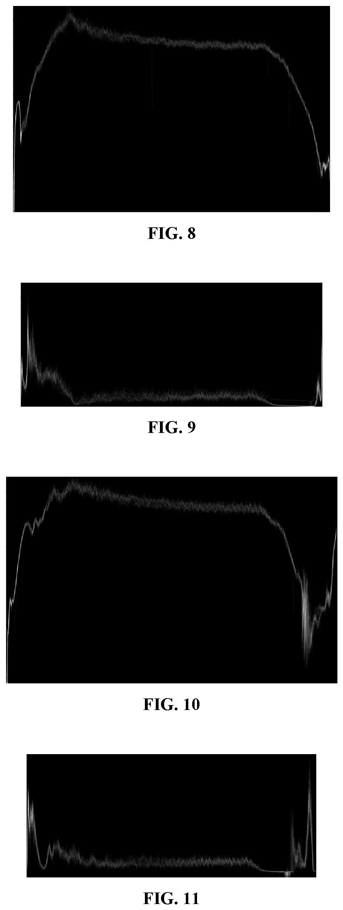

The processing procedure is the same as that in the step (2.1), and the displacement domain distribution density grayscale images of opening speed, opening current, closing speed, and closing current are obtained, as shown in FIGS. 8-11.

### (2.3) Performing image data alignment.

Maximum length and width values of the calibration data distribution density grayscale images and the data to be diagnosed distribution density grayscale images are taken as maximum dimensions. Zero padding is applied to upper and right sides of the opening data image arrays according to the maximum dimensions, and zero padding is applied to upper and left sides of the closing data image arrays according to the maximum dimensions.

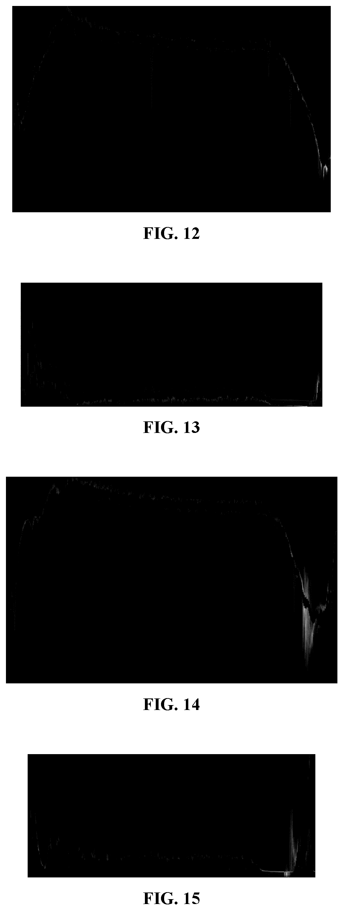

### (2.4) A difference density image is generated by a method that sets the pixel values of overlapping regions to zero, as shown in FIGS. 12-15.

(3) Performing change area recognition and change degree evaluation on the basis of the difference density image to obtain a vehicle door state offset degree. This step specifically includes:
(3.1) performing change area recognition.

In this embodiment, a large change area is recognized using the pixel-and-sliding-window recognition method.
1) Initial area recognition: a sliding window with a window length of 50 and a step size of 50 is set. A sum of pixel values in each window of the displacement domain difference density image is calculated. Sums of pixel values are sorted, and large change areas are recognized according to pixel-sum area recognition rules.
2) A sliding window with a window length of 3 and a step size of 3 is set. For the previously recognized large change areas, a sum of pixel values are calculated within smaller windows, and a refined change area is recognized according to pixel-sum area recognition rules.
3) The regions of changes for the door are recognized as follows: opening speed at 703-718 mm and 650-698 mm, opening current at 712-718 mm, closing speed at 63-75 mm, and closing current at 51-63 mm.

### (3.2) Evaluating a change degree evaluation.

In this embodiment, the change degree evaluation is performed using regional centroid offset features and co-occurrence matrix correlation features.

### (3.2.1) The change degree evaluation is performed using the regional centroid offset feature evaluation method.

a1) Calculating centroid coordinates of the change area in the displacement domain distribution density images of the calibration data and the data to be diagnosed, respectively. Centroid coordinates of the change area in the time series or displacement domain distribution density images of the calibration data and the data to be diagnosed are calculated, respectively. For a discrete two-dimensional image, assuming its pixel value to be I(i, j), where i denotes the abscissa of a pixel point and j denotes an ordinate of the pixel point. Formulas for calculating a centroid (*Gₓ, G_{y}*) of the image are as follows: ${G}_{x} = \left(\sum \left(i*I\left(i, j\right)\right)\right) / M$ ${G}_{y} = \left(\sum \left(j*I\left(i, j\right)\right)\right) / M$ where M is a sum of all pixel values of the image: *M* = ΣΣ(*I*(*i*, *j*))
2) Calculating absolute centroid offsets Δ*Gₓ* and ΔG*_{y}* , as well as relative centroid offsets *Rate*(*Gₓ*) and *Rate*(*G_{y}*), of the data to be diagnosed relative to the calibration data according to a centroid (*G_{xstd}, G_{ystd}*) of the calibration data and a centroid (*G_{xdiag}, G_{ydiag}*) of the data to be diagnosed, with calculation formulas as follows: $Δ {G}_{x} = {G}_{{x}_{diag}} - {G}_{{x}_{std}}$ $Δ {G}_{y} = {G}_{{y}_{diag}} - {G}_{{y}_{std}}$ $Rate \left({G}_{x}\right) = Δ {G}_{x} / {G}_{{x}_{std}}$ $Rate \left({G}_{y}\right) = Δ {G}_{y} / {G}_{{y}_{std}}$ where *G_{xstd}* and *G_{ystd}* are horizontal and vertical coordinates of a centroid of the calibration data, respectively; *G_{xdiag}* and *G_{ydiag}* are horizontal and vertical coordinates of a centroid of the data to be diagnosed, respectively; Δ*Gₓ* and Δ*G_{y}* are absolute horizontal and vertical centroid offsets of the data to be diagnosed relative to the calibration data, respectively; and *Rate*(*Gₓ*) and *Rate*(*G_{y}*) are relative horizontal and vertical centroid offsets of the data to be diagnosed relative to the calibration data, respectively.
a3) Comparing with a predetermined centroid alarm threshold; and when the threshold is exceeded, a degree of centroid offset is considered to satisfy the degree evaluation conditions.

In this embodiment, the centroid alarm thresholds are set as shown in Table 1 below, and are determined according to the application and tracking results of the model at the preliminary phase.

**Table 1 Centroid alarm threshold settings**

| Image type | Δ*Gₓ* | Δ*G_{y}* | *Rate*(*Gₓ*) | *Rate*(*G_{y}*) |
|---|---|---|---|---|
| Opening speed | 0.01 | 32 | 0.002 | 0.001 |
| Opening current | 0.009 | 34 | 0.008 | 0.002 |
| Closing speed | 0.004 | 15 | 0.0008 | 0.001 |
| Closing current | 0.007 | 12 | 0.001 | 0.008 |

For the change area obtained in step (3.1): an opening speed at 703-718 mm and 650-698 mm, an opening current at 712-718 mm, a closing speed at 63-75 mm, and a closing current at 51-63 mm, a centroid offset of each region is calculated based on the above table. The calculation results are shown in Table 2 below.

**Table 2 Calculated centroid offsets of each area**

| Image type | Alarm region | ΔGₓ | ΔG_{y} | Rate (Gₓ) | Rate (G_{y}) | Satisfying evaluation conditions or not |
|---|---|---|---|---|---|---|
| Opening speed | 703-718 | 0.7 | 6.24 | 0.48 | 0.04 | No |
| Opening speed | 650-698 | 0.95 | 8.35 | 0.06 | 0.06 | No |
| Opening current | 712-718 | 5.88 | 2.18 | 0.22 | 0.07 | No |
| Closing speed | 63-75 | 0.18 | 57.49 | 0.07 | 0.20 | Yes |
| Closing current | 51-63 | 12.73 | 66.63 | 0.51 | 0.70 | Yes |

a4) The offset values calculated in Table 2 are compared with the threshold setting values in Table 1, it is thus determined that the change degree satisfies the centroid evaluation conditions. It can be seen that the areas satisfying the centroid offset evaluation conditions are a closing speed of 63-75 mm and a closing current of 51-63 mm, where 63-75 mm and 51-63 mm denote distances from a single door to its fully closed position.

### (3.2.2) Performing secondary evaluation using the co-occurrence matrix correlation feature evaluation method

For the abnormal regions that satisfy the centroid offset evaluation, the corresponding large change areas are subjected to co-occurrence matrix correlation feature evaluation. The main steps are as follows:
b1) calculating a correlation feature of a co-occurrence matrix of the calibration data: two sets of quantitative data are randomly selected from the set of calibration data as the data to be diagnosed and the calibration data, change area are recognized to obtain large change areas of each displacement domain difference density image, and a correlation feature *p_{std}* of the co-occurrence matrix is calculated.
b2) Calculating a correlation feature of a co-occurrence matrix of the data to be diagnosed: data of the abnormal regions recognized following centroid evaluation are as follows: closing speed at 63-75 mm and closing current at 51-63 mm. It can be determined that the large change areas of the displacement domain difference density images are closing speed at 50-100 mm and closing current at 50-100 mm, and the co-occurrence matrix correlation features *p_{diag}* of the corresponding image regions are calculated.
b3) Displacement domain difference density images *p_{std}* and *p_{diag}* are compared for determination. When *p_{diag}* > *p_{std}* , a change degree evaluation is considered to satisfy the co-occurrence matrix correlation evaluation conditions.

According to the above process, it is calculated that a closing speed *p_{std}* is 0.45, and *p_{diag}* is 0.68, *p_{diag}* > *p_{std}* ; the regions corresponding to the closing speed of 63-75 mm satisfy the correlation evaluation conditions for the large change areas; a closing current *p_{std}* is 0.50 and *p_{diag}* is 0.71, and *p_{diag}* > *p_{std}* , the regions corresponding to the closing current of 51-63mm satisfy the correlation evaluation conditions for the large change areas.

After evaluation, the large change areas corresponding to the closing speed of 63-75 mm and the closing current of 51-63 mm satisfy the co-occurrence matrix correlation evaluation conditions.

### (3.3) Performing region integration.

The data areas exhibiting a change degree that satisfy the evaluation rules are integrated. In this embodiment, the integrated alarm region obtained is closing 51-75 mm.
(4) Establishing a vehicle door functional component zoning map, performing functional component association on the basis of the vehicle door state offset degree, and recognizing an abnormal functional component.

The establishing a vehicle door functional component zoning map includes zoning a vehicle door movement process according to the data of motor rotation angle. A zoning interval is greater than a minimum angle that is recognized by a motor position sensor, such that types of functional components within the same zoning are minimized, as shown in FIG. 16.

The closing displacement offset is converted into the motor rotation angle. According to the vehicle door functional component zoning map, the functional zoning corresponding to the regions of data variation is obtained, and the associated functional components corresponding to that zoning are then determined. The formula for converting the rotation angle into the displacement is as follows, where *d* is 64: $angle = dis * 360 / d$

It is calculated that the closing of 51-75 mm corresponds to a motor rotation angle of 287-422°. According to the vehicle door functional component zoning map, the corresponding functional zonings are zonings 10-12, and the associated components include a belt transmission system, a motor, a motor fixing seat bearing, a lead screw intermediate support, an end unlocking intermediate support, a nylon nut of lead screw nut assembly, a long guide column sliding sleeve assembly, a short guide column sliding sleeve assembly, a stop pin and insert block assembly, and a helical section motion of lead screw nut assembly. Therefore, in this embodiment, the parts where the vehicle door state is abnormal may include the belt transmission system, the motor, the motor fixing seat bearing, the lead screw intermediate support, the end unlocking intermediate support, the nylon nut of lead screw nut assembly, the long guide column sliding sleeve assembly, the short guide column sliding sleeve assembly, the stop pin and insert block assembly, and the helical section motion of lead screw nut assembly.

(5) Performing model iteration. Based on feedback from main line operation and maintenance, operational labeled data are obtained. Main line operational data and data labels are input into a parameter iteration model to automatically update parameters of the model.

In the present invention, image processing is performed on motor data to generate grayscale images related to data distribution density, vehicle doors with state offset and offset areas are recognized through multiple intelligent algorithms, the change area are associated with functional components of the door system according to the vehicle door functional component zoning map, and the vehicle door state offset areas are combined with associated components as early warning information for pushing, thereby facilitating precise on-site maintenance. In addition, according to on-site application conditions, model iteration and optimization are continuously performed.

The present invention provides a vehicle door state recognition system based on time series data to image conversion, including:
a data acquisition and preprocessing module, configured to collect time series data in a vehicle door moving process and perform data preprocessing;
a difference density image generation module, configured to separately perform distribution density grayscale image processing on the preprocessed set of calibration data and the preprocessed set of data to be diagnosed, and generate a difference density image;
a change area and degree recognition module configured to perform change area recognition and change degree evaluation on the basis of the difference density image to obtain a vehicle door state offset degree; and
an abnormal functional component association module, configured to establish a vehicle door functional component zoning map, perform functional component association on the basis of the vehicle door state offset degree, and recognize an abnormal functional component.

The present invention provides an electronic device, including a memory, a processor and a computer program stored on the memory and runnable on the processor, where when the computer program is loaded into the processor, the above vehicle door state recognition method based on time series data to image conversion is implemented.

The present invention further provides a computer-readable storage medium having a computer program stored thereon, where when the computer program is executed by a processor, the above vehicle door state recognition method based on time series data to image conversion is implemented.

The computer-readable storage medium includes RAM, ROM, EEPROM, CD-ROM or other optical disk storage devices, magnetic disk storage devices or other magnetic storage devices, flash memory, or any other media capable of storing program codes in the form of instructions or data structures and accessible by a computer.

The processor is configured to execute the computer program stored in the memory to implement the various steps of the method described in the above embodiments.

## Claims

1. A vehicle door state recognition method based on time series data to image conversion, **characterized by** comprising the following steps:
(1) collecting time series data in a vehicle door moving process and performing data preprocessing, and defining a set of calibration data and a set of data to be diagnosed;
(2) separately performing distribution density grayscale image processing on the preprocessed set of calibration data and the processed set of data to be diagnosed, and generating a difference density image;
(3) performing change area recognition and change degree evaluation on the basis of the difference density image to obtain a vehicle door state offset degree; and
(4) establishing a vehicle door functional component zoning map, performing functional component association on the basis of the vehicle door state offset degree, and recognizing an abnormal functional component.

2. The vehicle door state recognition method based on time series data to image conversion according to claim 1, **characterized in that** the time series data in a vehicle door moving process in the step (1) comprises parameter data such as motor current, motor speed, and motor rotation angle during door opening and closing processes.

3. The vehicle door state recognition method based on time series data to image conversion according to claim 2, **characterized in that** the data preprocessing in the step (1) comprises eliminating abnormal data and/or performing displacement domain conversion on the time series data.

4. The vehicle door state recognition method based on time series data to image conversion according to claim 3, **characterized in that** for a single set of data of motor current, motor rotational speed, and motor rotation angle, the displacement domain conversion comprises plotting a displacement domain curve image of the single set of data using the motor rotation angle or a displacement converted from the motor rotation angle as a horizontal coordinate, and the motor rotational speed or motor current as a vertical coordinate, reading a row index of a lowest pixel in each column of the image as a rotational speed or current corresponding to the rotation angle or displacement value, thereby obtaining displacement domain data.

5. The vehicle door state recognition method based on time series data to image conversion according to claim 4, **characterized in that** the set of calibration data comprises a single-door or multi-door time series data set or a displacement domain data set; and the set of data to be diagnosed comprises a single-door time series data set or a displacement domain data set, wherein the multi-door refers to a collection of doors operating under similar working conditions within a same time period.

6. The vehicle door state recognition method based on time series data to image conversion according to claim 5, **characterized in that** the distribution density grayscale image processing in the step (2) comprises:
for the single-door time series data set or displacement domain data set, selecting quantitative data from the data set as an image processing dataset; creating a zero-filled array by taking a maximum value of a predetermined parameter in the dataset as a number of rows of the array, and a maximum length of the parameter data as a number of columns of the array; for each value in each data entry of the parameter dataset, incrementing an value at a corresponding position of the array by 1 to form a data density array related to the data distribution quantity; and scaling values of the data density array to a range of 0-255 to generate a displacement domain distribution density grayscale image of the parameter data; and
for the multi-door time series data set or displacement domain data set, selecting quantitative data from the data set as an image processing dataset; creating a zero-filled array by taking a maximum value of a predetermined parameter in the dataset as a number of rows of the array, and a maximum length of the parameter data as a number of columns of the array; for each value in each data entry of the parameter dataset, incrementing an value at a corresponding position of the array by 1 to form a data density array related to the data distribution quantity; calculating sparse pixel values of the array according to a predetermined proportion, and setting the sparse pixel values of the array to zero, thereby obtaining a common-region density array of the time series data; and scaling values of the data density array to a range of 0-255 to generate a displacement domain distribution density grayscale image of the parameter data.

7. The vehicle door state recognition method based on time series data to image conversion according to claim 6, **characterized in that** before generating a difference density image in the step (2), the method further comprises performing image data alignment.

8. The vehicle door state recognition method based on time series data to image conversion according to claim 7, **characterized in that** the image data alignment comprises selecting maximum length and width values of the distribution density grayscale images of the calibration data and the data to be diagnosed as maximum dimensions, and padding zeros at corresponding positions in other image arrays according to the maximum dimensions.

9. The vehicle door state recognition method based on time series data to image conversion according to claim 7, **characterized in that** the generating a difference density image in the step (2) comprises removing areas identical to those in the aligned calibration data distribution density grayscale image based on the aligned distribution density grayscale image of the set of data to be diagnosed to generate the difference density image.

10. The vehicle door state recognition method based on time series data to image conversion according to claim 9, **characterized in that** the change area recognition in the step (3) comprises recognizing areas with relatively concentrated data points in the difference density image based on intelligent algorithms, wherein the intelligent algorithms comprise a pixel-and-sliding-window recognition method and an effective pixel column recognition method.

11. The vehicle door state recognition method based on time series data to image conversion according to claim 10, **characterized in that** the pixel-and-sliding-window recognition method comprises:
1) calculating and ranking a sum of pixel values within an area of the difference density image using a sliding window;
2) obtaining a large change area and a refined change area based on change window recognition rules; and
3) dividing data changes into full-process changes or local changes according to the large change area and the change window recognition rules; wherein
the change window recognition rules are as follows:
(i) when a sum of pixel values of a window ranking first is greater than twice a sum of pixel values of a window ranking second, the image is considered to exhibit a single local area change, and the change area is a time series or displacement region corresponding to the window ranking first;
(ii) when a sum of pixel values of more than half of the windows is greater than 0.5 times pixel values of the window ranking first, the image is considered to exhibit a full-process area change, and the full process constitutes the change area; and
(iii) when the sum of pixel values of the window ranking first is less than twice the sum of pixel values of the window ranking second, and a sum of pixel values of less than half of the windows is greater than 0.5 times the sum of pixel values of the window ranking first, the image is considered to have a plurality of local area changes, and the change area is the time series or displacement region corresponding to the windows where the sum of pixel values is greater than 0.5 times the sum of pixel values of the window ranking first.

12. The vehicle door state recognition method based on time series data to image conversion according to claim 10, **characterized in that** the effective pixel column recognition method comprises:
1) pre-setting an effective pixel grayscale threshold and a minimum continuous length threshold of effective pixel columns;
2) obtaining all columns in which effective pixels of the image are located based on the difference density image;
3) determining the continuity of the effective pixel columns to obtain continuous areas of effective pixel columns; and
4) determining a length of the continuous areas of effective pixel columns; when a maximum length of the continuous area is less than a minimum continuous length threshold of effective pixel columns, no area is output; otherwise, all sub-areas are output as change areas.

13. The vehicle door state recognition method based on time series data to image conversion according to claim 9, **characterized in that** the performing change degree evaluation using a feature analysis evaluation method in the step (3) and obtaining a vehicle door state offset degree through feature analysis; wherein the feature analysis evaluation method comprises a regional centroid offset evaluation method, a co-occurrence matrix evaluation method, a mean square error evaluation method, and an effective pixel point evaluation method.

14. The vehicle door state recognition method based on time series data to image conversion according to claim 13, **characterized in that** the regional centroid offset evaluation method comprises:
1) calculating centroid coordinates of the change area in the time series or displacement domain distribution density images of the calibration data and the data to be diagnosed, respectively; for a discrete two-dimensional image, assuming its pixel value to be *I*(*i*, *j*), wherein *i* denotes a horizontal coordinate of a pixel point and j denotes a vertical coordinate of the pixel point; and formulas for calculating a centroid (*Gₓ*, *G_{y}*) of the image are as follows: ${G}_{x} = \left(\sum \left(i*I\left(i, j\right)\right)\right) / M$ ${G}_{y} = \left(\sum \left(j*I\left(i, j\right)\right)\right) / M$
wherein *M* is a sum of all pixel values of the image: *M =* ΣΣ(*I*(*i, j*))
2) calculating absolute centroid offsets Δ*Gₓ* and Δ*G_{y}*, as well as relative centroid offsets *Rate*(*Gₓ*) and *Rate*(*G_{y}*), of the data to be diagnosed relative to the calibration data according to a centroid (*G_{xstd}*, *G_{ystd}*) of the calibration data and a centroid (*G_{xdiag}*, *G_{ydiag}*) of the data to be diagnosed, with calculation formulas as follows: $Δ {G}_{x} = {G}_{{x}_{diag}} - {G}_{{x}_{std}}$ $Δ {G}_{y} = {G}_{{y}_{diag}} - {G}_{{y}_{std}}$ $Rate \left({G}_{x}\right) = Δ {G}_{x} / {G}_{{x}_{std}}$ $Rate \left({G}_{y}\right) = Δ {G}_{y} / {G}_{{y}_{std}}$
3) comparing with a predetermined centroid alarm threshold; and determining that the door state in the change area is offset when the threshold is exceeded.

15. The vehicle door state recognition method based on time series data to image conversion according to claim 13, **characterized in that** the co-occurrence matrix evaluation method comprises:
1) calculating a correlation feature of a co-occurrence matrix of the calibration data: two sets of quantitative data are randomly selected from the set of calibration data as the data to be diagnosed and the calibration data, a large change area is recognized using the pixel-and-sliding-window recognition method to obtain the large change area of each difference density image, and a correlation feature *p_{std}* of the co-occurrence matrix of the calibration data is calculated;
2) calculating a correlation feature of a co-occurrence matrix of the data to be diagnosed: a correlation feature *p_{diag}* of the co-occurrence matrix of the data to be diagnosed for the image region is calculated according to the large change area of the difference density image; and
3) comparing *p_{std}* and *p_{diag}* for determination; and when *p_{diag} > p_{std}* , determining that the door state in the change area is offset.

16. The vehicle door state recognition method based on time series data to image conversion according to claim 2, **characterized in that** the establishing a vehicle door functional component zoning map in the step (4) comprises zoning a vehicle door movement process according to the data of motor rotation angle; and a zoning interval is greater than a minimum angle that is recognized by a motor position sensor, such that types of functional components within the same zoning are minimized.

17. The vehicle door state recognition method based on time series data to image conversion according to claim 16, **characterized in that** the functional component association in the step (4) comprises converting the vehicle door state offset data into the data of motor rotation angle, searching for the corresponding functional component zoning and functional components in the zoning using the door functional component zoning map based on the data of rotation angle.

18. The vehicle door state recognition method based on time series data to image conversion according to claim 17, **characterized by** further comprising iteratively updating the model, wherein the iteratively updating the model comprises inputting main line operational data and data labels as a model to automatically update parameters of the model based on feedback from main line operation and maintenance.

19. A vehicle door state recognition system based on time series data to image conversion, **characterized by** comprising:
a data acquisition and preprocessing module configured to collect time series data in a vehicle door moving process and perform data preprocessing;
a difference density image generation module configured to separately perform distribution density grayscale image processing on the preprocessed set of calibration data and the preprocessed set of data to be diagnosed, and generate a difference density image;
a change area and degree recognition module configured to perform change area recognition and change degree evaluation on the basis of the difference density image to obtain a vehicle door state offset degree; and
an abnormal functional component association module configured to establish a vehicle door functional component zoning map, perform functional component association on the basis of the vehicle door state offset degree, and recognize an abnormal functional component.

20. The vehicle door state recognition system based on time series data to image conversion according to claim 19, **characterized in that** the system is applied to implement the vehicle door state recognition method based on time series data to image conversion according to any one of claims 1-18.

21. An electronic device, **characterized by** comprising a memory, a processor and a computer program stored on the memory and runnable on the processor, wherein when the computer program is loaded into the processor, the vehicle door state recognition method based on time series data to image conversion according to any one of claims 1-18 is implemented.

22. A computer-readable storage medium having a computer program stored thereon, **characterized in that** when the computer program is executed by a processor, the vehicle door state recognition method based on time series data to image conversion according to any one of claims 1-18 is implemented.
